**Europäisches Patentamt**

**European Patent Office**

**Office européen des brevets**

(19)

(11) Veröffentlichungsnummer : **0 181 574 B1**

(12)

# EUROPÄISCHE PATENTSCHRIFT

(45) Veröffentlichungstag der Patentschrift : 09.11.88

(21) Anmeldenummer : 85113884.2

(22) Anmeldetag : 03.08.81

(60) Veröffentlichungsnummer der früheren Anmeldung nach Art. 76 EPÜ : 0045506

(51) Int. Cl.⁴ : **F 24 J   2/26**, F 24 J   2/04

(54) **Verfahren zur Erstellung einer als Luftkollektor für eine Wärmepumpenanlage dienenden Verkleidung von Gebäude- oder dergl. -wänden und/oder -dächern.**

(30) Priorität : 04.08.80 DE 3029527
14.10.80 DE 3038680
30.01.81 DE 3103173
30.03.81 DE 3112530
15.04.81 DE 3115132

(43) Veröffentlichungstag der Anmeldung : 21.05.86 Patentblatt 86/21

(45) Bekanntmachung des Hinweises auf die Patenterteilung : 09.11.88 Patentblatt 88/45

(84) Benannte Vertragsstaaten :
**AT BE CH FR GB LI NL**

(56) Entgegenhaltungen :
EP-A- 0 011 138
EP-A- 0 015 545
DE-A- 2 615 280
DE-A- 2 702 938
DE-A- 2 702 939
DE-A- 2 848 902
GB-A- 1 589 554

(73) Patentinhaber : **Pfeifer, Johann B.**
**Römerstrasse 60**
**D-6530 Bingen-Sponsheim (DE)**

(72) Erfinder : **Pfeifer, Johann B.**
**Römerstrasse 60**
**D-6530 Bingen-Sponsheim (DE)**

(74) Vertreter : **Popp, Eugen, Dr. et al**
**MEISSNER, BOLTE & PARTNER Widenmayerstrasse**
**48 Postfach 86 06 24**
**D-8000 München 86 (DE)**

**Beschreibung**

Die Erfindung betrifft ein Verfahren zur Herstellung einer als Luftkollektor für eine Wärmepumpenanlage dienenden Verkleidung von Gebäude- oder dgl. -wänden und/oder -dächern gemäß dem Oberbegriff des Patentanspruches 1.

Aus der EP-A-15 545 ist ein Verfahren zur Erstellung einer als Luftkollektor für eine Wärmepumpenanlage dienenden Verkleidung von Gebäudewänden bekannt, wobei die Verkleidung aus aneinandergrenzend an der Wand befestigten Wandprofilen zusammengesetzt wird, die jeweils eine etwa C-förmige Ausnehmung zur klammerartig umgreifenden Aufnahme eines von einen Wärmetauschermedium durchströmten Rohres aufweisen. Die Wandprofile sind jedoch so konzipiert, daß die vom Wärmetauschermedium durchströmten Rohre vor der Montage der Wandprofile an der Wand in der C-förmigen Ausnehmung positioniert werden müssen. Bei Verwendung eines durchgehenden Wärmetauscherrohres, das an den Enden seiner Rohrschlange gebogen wird, ist diese Montageart nicht möglich. Des weiteren ist bei längeren Wandelementen nicht vorstellbar, wie die Montage bei Verwendung eines durchgehenden Wärmetauscherrohres überhaupt noch durchgeführt bzw. beherrscht werden kann. Es müßte dann nämlich gleichzeitig das Wärmetauscherrohr endseitig gebogen, in die C-förmige Ausnehmung des zugeordneten Wandelements eingepreßt und das Wandelement positioniert und an der Wand befestigt werden. Diese Verfahrensweise würde ein besonderes handwerkliches Geschick erfordern.

Aus der DE-A-27 02 939 ist es bekannt, Dächer mit Bandprofilen abzudecken, deren untere Längsränder jeweils etwa C-förmig gebogen sind zur Aufnahme eines sich parallel zur unteren Längsrandseite erstreckenden, von einem Wärmetauschermedium durchströmten Rohres. Dabei erfolgt die Montage der Bandprofile von unten nach oben. Dies ist dadurch bedingt, daß die unteren Längsränder der Bandprofile jeweils nach innen, d. h. zur Wand hin, gebogen sind.

Endseitig werden die den Bandprofilen zugeordneten Rohrabschnitte ganz offensichtlich durch gesonderte Rohrkrümmer miteinander verbunden. Schließlich sind gesonderte Spannelemente zur gegenseitigen Verspannung der Bandprofile vorgesehen. Die Konstruktion dieser bekannten Blechabdeckung für Dächer ist relativ aufwendig ; dementsprechend aufwendig ist das Verfahren zur Herstellung einer solchen Blechabdeckung.

Der vorliegenden Erfindung liegt daher die Aufgabe zugrunde, ein Verfahren zur Erstellung als Luftkollektor für eine Wärmepumpenanlage dienenden Verkleidung von Gebäude- oder dgl. -wänden und/oder -dächern zu schaffen, welches wesentlich einfacher als die bekannten Verfahren ist und dementsprechend schnell auch von ungeübten Monteuren beherrscht werden kann und bei dem die Gefahr von Leckagen durch die Art der Rohrverlegung äußerst gering ist.

Diese Aufgabe wird durch die kennzeichnenden Merkmale des Patentanspruches 1 gelöst, wobei Patentanspruch 2 eine bevorzugte Ausführungsforms des erfindungsgemäßen Verfahrens beschreibt.

Das erfindungsgemäße Verfahren stellt sich als denkbar einfach dar. Es wird zunächst ein Bandprofil an der Wand oder einem Dach befestigt ; anschließend wird nach entsprechender endseitiger Biegung des Wärmetauscherrohres dieses in den unteren C-förmig ausgebildeten Rand des an der Wand befestigten Bandprofils eingepreßt ; dann kann ein weiteres Bandprofil angeschlossen werden, ohne daß auf das Wärmetauscherrohr Rücksicht genommen werden muß. Diese Arbeiten können auch durch Anlernkräfte nach kürzester Zeit beherrscht werden. Durch die Art der Rohrverlegung lassen sich auch Rohranschlüsse bzw. -verbindungen auf ein Minimum reduzieren mit der Folge einer entsprechend niedrigen Gefahr von Leckagen.

Nachstehend wird das erfindungsgemäße Verfahren anhand eines in der anliegenden Zeichnung schematisch dargestellten Ausführungsbeispieles näher erläutert. Es zeigen :

Fig. 1 Teil eines erfindungsgemäß erstellten Luftkollektors ; und

Fig. 2 eine schematische Darstellung des erfindungsgemäßen Verfharens zur Erstellung eines Luftkollektors entsprechend Fig. 1.

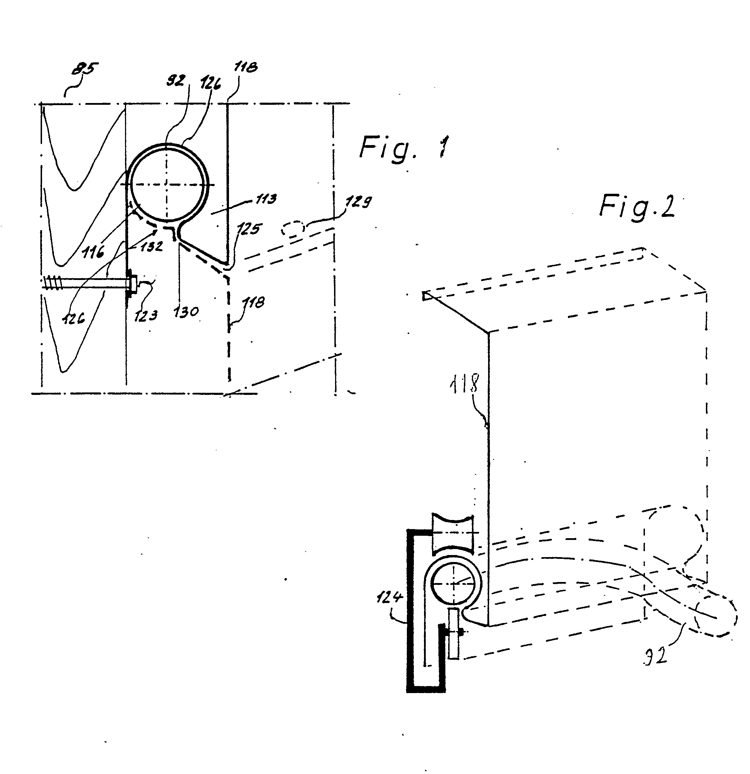

In Fig. 1 ist eine Ausführungsform von Bandprofilen zur Erstellung einer als Luftkollektor für eine Wärmepumpenanlage dienenden Verkleidung von Gebäude- oder dgl. -wänden 85 dargestellt, wobei die Verkleidung aus sich jeweils horizontal erstreckend und unmittelbar aneinandergrenzend an der Wand 85 befestigten Bandprofilen der dargestellten Art zusammengesetzt wird. Die Bandprofile sind in Fig. 1 ebenso wie in Fig. 2 mit der Bezugsziffer 118 gekennzeichnet. Die Bandprofile 118 weisen jeweils eine im montierten Zustand nach unten offene, sich entlang einer unteren Längsrandseite erstreckende, etwa C-förmige Randausnehmung 126 zur klammerartig umgreifenden Aufnahne eines von einem Wärmetauschermedium durchströmten Rohres 92 auf. Zur Erstellung des Luftkollektors werden die Bandprofile 118 fortschreitend von oben nach unten montiert, wobei zunächst ein oberes Bandprofil 118 mittels die wandseitigen Schenkel der unteren C-förmig ausgebildeten Randausnehmung 126 durchsetzende Schrauben 123 an der Wand 85 befestigt wird. Anschließend wird von unten her in die C-förmig ausgebildete Randausnehmung 126 das Wärmetauscherrohr 92 eingepreßt. Dann wird an die untere Längsrandseite des montierten Bandprofils ein unteres Bandprofil 118 mit seiner oberen Längsrandseite angeschlossen und entsprechend dem oberen Bandprofil an der Wand 85 befestigt. Daraufhin wird das Wärmetauscherrohr 92 stirnseitig umgebogen und ohne Unterbrechung in die untere C-förmige Randausnehmung 126 des unteren Bandprofils eingepreßt. Diese Arbeiten werden bis zur vollständigen Erstellung des Luftkollektors fortgesetzt. Fig. 1 läßt erkennen, daß die Randausnehmung 126 entsprechend den Außenkonturen des Wärmetauscherrohres 92 ausgebildet ist derart, daß die das Wärmetauscherrohr 92 umgreifende Innenkontur der Randausnehmung 126 kontakteng um das Wärmetauscherrohr 92 herum anliegt, und zwar vorzugweise unter einer gewissen Vorspannung, um einen guten Wärmeübergangskontakt zu erreichen. Die untere Randausnehmung 126 ist durch eine Spaltöffnung 116 hindurch zugänglich. Diese ist deutlich enger als der Außendurchmesser des Wärmetauscherrohres 92, so daß beim Einlegen des Wärmetauscherrohres 92 in die untere Randausnehmung 126 der Öffnungsspalt 116 auseinandergedrückt bzw. aufgeweitet werden muß, um dann bei eingelegtem Wärmetauscherrohr aufgrund der Eigenelastizität des Materials des Bandprofils 118 wieder in die ursprüngliche Lage zurückzufedern. Der Öffnungsspalt 116 ist ferner aufgrund eines druckfesten Profilabschnitts 113 des Bandprofils 118 mit einer gewissen Komponente gegen die Wand 85 hin gerichtet, so daß das Wärmetauscherrohr 92 dadurch mit einer gegen die Wand 95 gerichteten Kraftkomponente festgehalten wird. Dieser Halt wird noch dadurch unterstützt, daß der Profilabschnitt 113 das Eigengewicht des Bandprofils 118 gegen die Wand 85 drückt, zumal die Befestigung des Bandprofils 118 an der Wand 85 mittels der den wandseitigen Schenkel 132 durchsetzenden Schrauben 123 erfolgt. Dementsprechend wirkt das Eigengewicht des Bandprofils 118 sich über die Wärmetauscherrohre 92 abstützend als kontaktfördernd zwischen Wärmetauscherrohr 92 und Bandprofil 118 aus.

Entsprechend Fig. 1 ist die obere Längsrandseite 130 des Bandprofils 118 so ausgebildet, daß sie zum einen die Spaltöffnung 116 der zugeordneten unteren Randausnehmung 126 schließt, und zwar unter Anlage an das eingelegte Wärmetauscherrohr 92, und zum anderen sich unter dem Profilabschnitt 113 schräg nach unten und außen erstreckt.

Lüftungsschlitze 125 und Entlüftungslöcher 129 dienen der Entlüftung der Bandprofile 118.

Entsprechend Fig. 2 werden die Wärmetauscherrohre 92 bei der Montage mittels eines Rollenpreßwerkzeuges 124 in die untere Randausnehmung 126 eingepreßt.

### Patentansprüche

1. Verfahren zur Erstellung einer als Luftkollektor für eine Wärmepumpenanlage dienenden Verkleidung von Gebäude- oder dgl. -wänden und/oder -dächern, wobei die Verkleidung aus sich jeweils horizontal erstreckend und unmittelbar aneinandergrenzend an der Wand oder dgl. befestigten Bandprofilen (118) zusammengesetzt wird, die jeweils eine im montierten Zustand nach unten offene, sich entlang einer unteren Längsrandseite erstreckende, etwa C-förmige Randausnehmung (126) zur klammerartig umgreifenden Aufnahme eines von einem Wärmetauschermedium durchströmten Rohres (92) aufweisen, dadurch gekennzeichnet, daß die Bandprofile (118) fortschreitend von oben nach unten montiert werden, wobei zunächst ein oberes Bandprofil (118) mittels die wandseitigen Schenkel der unteren C-förmig ausgebildeten Randausnehmung (126) durchsetzender Schrauben (123) an der Wand oder dgl. befestigt wird, daß anschließend von unten her in die C-förmig ausgebildete Randausnehmung (126) das Wärmetauscherrohr (92) eingepreßt wird, und daß dann an die untere Längsrandseite des montierten Bandprofils ein unteres Bandprofil (118) mit seiner oberen Längsrandseite angeschlossen und entsprechend dem oberen Bandprofil an der Wand oder dgl. befestigt wird, um daraufhin das Wärmetauscherrohr (92) stirnseitig umzubiegen und ohne Unterbrechung in die untere C-förmige Randausnehmung (126) des unteren Bandprofils einzupressen, wobei diese Arbeiten bis zur vollständigen Erstellung des Luftkollektors fortgesetzt werden.

2. Verfahren nach Anspruch 1, dadurch gekennzeichnet, daß das Wärmetauscherrohr (92) mittels eines Rollenpreßwerkzeuges (124) in die untere Randausnehmung (126) eingepreßt wird.

### Claims

1. A method of providing a lining of walls and/or roofs of buildings or the like, wherein said lining serves as an air collector for a heat pump system and is assembled from strip sections (118) each of which extends horizontally, which are mounted directly adjacent each other on the wall or the like and each of which in the mounted state has a downwardly open, approximately C-shaped marginal recess (126) extending along a lower longitudinal edge for receiving in a clamp-like embracing fashion a tube (92) having a heat exchange medium flowing therethrough, characterized in that said strip sections (118) are mounted progressively from top to bottom, wherein an upper strip section (118) is first secured to the wall or the like by means of screws (123) passing through the wall-side legs of the lower C-shaped marginal recess (126), that said heat exchange tube (92) is subsequently pressed from below into said C-shaped marginal recess (126), and that a lower strip section (118) is then with its upper longitudinal edge joined with the lower longitudinal edge of said mounted strip section and is secured to the wall or the like in a way corresponding to that of the upper strip section, whereupon said heat exchange tube (92) is bent at its face end and is pressed without interruption into the lower C-shaped marginal recess (126) of said lower strip section, wherein these steps are continued until said air collector has been completed.

2. The method according to claim 1, characterized in that said heat exchange tube (92) is pressed into said lower marginal recess (126) by means of a roller-type pressing tool (124).

## Revendications

1. Procédé de construction d'un revêtement de murs et/ou de toitures de bâtiments ou analogues, servant de collecteur pour une installation de pompe à chaleur, dans lequel le revêtement est composé de profilés (118) fixés au mur ou analogue et s'étendant à l'horizontale et de manière adjacente, lesquels présentent chacun un évidement (126) sensiblement en forme de C ouvert vers le bas dans la direction de montage et s'étendant le long d'un bord longitudinal inférieur pour loger, en l'entourant étroitement, un tube (92) traversé par un fluide d'échange de chaleur, caractérisé en ce que les profilés (118) sont montés progressivement du haut vers le bas en sorte que, tout d'abord, un profilé supérieur (118) est fixé au mur ou analogue au moyen de vis (123) traversant la branche située côté du mur de l'évidement en forme de C, qu'ensuite le tube d'échange de chaleur (92) est pressé à partir du bas dans l'évidement marginal (126) en forme de C, qu'ensuite on fixe de manière correspondante un profilé inférieur (118) contre le bord longitudinal inférieur du profilé déjà monté, le bord longitudinal supérieur du profilé inférieur étant adjacent au profilé supérieur, pour après cela courber le tube d'échangeur de chaleur (92) du côté façade et le presser sans interruption dans l'évidement inférieur en forme de C du profilé inférieur, ces opérations étant poursuivies jusqu'à la construction complète du collecteur d'air.

2. Procédé selon la revendication 1, caractérisé en ce que le tube d'échange de chaleur (92) est pressé dans l'évidement marginal inférieur (126) au moyen d'un outil (124) de pression à rouleau.

Fig. 1

Fig. 2